Europäisches Patentamt

European Patent Office

Office européen des brevets

(19)

(11) Publication number: **0 259 978**

**A2**

(12) # EUROPEAN PATENT APPLICATION

(21) Application number: **87307103.9**

(22) Date of filing: **11.08.87**

(51) Int. Cl.⁴: **G02F 1/37**

(30) Priority: **11.08.86 JP 188201/86**

(43) Date of publication of application:
**16.03.88 Bulletin 88/11**

(84) Designated Contracting States:
**DE GB NL**

(71) Applicant: **SHARP KABUSHIKI KAISHA**
**22-22 Nagaike-cho Abeno-ku**
**Osaka 545(JP)**

(72) Inventor: **Yano, Seiki**
**126-80 Toyota-cho Kashihara-shi**
**Nara-ken(JP)**
Inventor: **Hijikata, Toshiki**
**269-2 Yuzaki Kawanishi-cho**
**Shiki-gun Nara-ken(JP)**

(74) Representative: **Brown, Kenneth Richard et al**
**R.G.C. Jenkins & Co. 26 Caxton Street**
**London SW1H 0RJ(GB)**

(54) **Higher harmonic generating device.**

(57) A semiconductor harmonic generating device comprising a nonlinear medium and a waveguide which is located(provided) in the upper face of the nonlinear medium, generate a higher harmonic laser light from a fundamental wave laser light which passing through the waveguide, wherein the waveguide has refractive index dispersion means for counterbalancing the refractive index difference caused by wavelength dispersion (which occurs in the nonlinear medium,) between the fundamental wave laser light and the higher harmonic laser light.

*FIG.1*

EP 0 259 978 A2

# HIGHER HARMONIC GENERATING DEVICE

## BACKGROUND OF THE INVENTION

The present invention relates to a higher harmonic generating device which generates a laser light of short wavelength, that is used for optical disks, measurements and medical field, which is converted from a fundamental wave laser light having specific wavelength.

It is well known that a method which generates a higher harmonic by using a nonlinear medium in order to generate a short wavelength laser light from a laser light having a specific wavelength. That is, it generates the higher harmonic laser light by matching phase with the incident fundamental wave using an ordinary ray and/or an extraordinary ray. However, in the above conventional generating device, it is difficult to match the phase between them because of matching the phase velocity by the angle regulation of the incident ray(the fundamental wave) and the temperature control of the nonlinear medium, and thus, it is not easy to generate the higher harmonic laser light at low cost.

## SUMMARY OF THE INVENTION

In view of the prior art described above, an object of the present invention is to provide a higher harmonic generating device capable of matching phase easily without the complicated angle regulation and temperature control.

The higher harmonic generating device of the present invention comprises a nonlinear medium and a waveguide which has refractive index dispersion means for counterbalancing the refractive index difference caused by wavelength dispersion between the fundamental wave laser light and the higher harmonic laser light which is generated in the nonlinear medium.

Briefly described, the higher harmonic laser light is generated when the incident fundamental wave laser light having specific wavelength passing through the waveguide in the nonlinear medium. Therefore, the higher harmonic generating device of the present invention is capable of matching phase easily and can be obtained a short wavelength laser light at high convertible rate and at low cost.

## BRIEF DESCRIPTION OF THE DRAWINGS

The present invention will become more fully understood from the detailed description given hereinbelow and the accompanying drawings which are given by way of illustration only, and thus are not limitative of the present invention and wherein:

Figure 1 is a schematic perspective view of a preferred embodiment of the present invention;

Figure 2 is an end view taken substantially along the line A-A of Figure 1;

Figure 3(A) is an explanatory drawing showing luminious intensity distribution of the fundamental wave laser light;

Figure 3(B) is an explanatory drawing showing luminious intensity distribution of the second higher harmonic laser light;

Figure 3(C) is a type diagram showing refractive index distribution caused by diffraction grating between the fundamental wave laser light and the second higher harmonic laser light.

## DESCRIPTION OF THE PREFERRED EMBODIMENTS

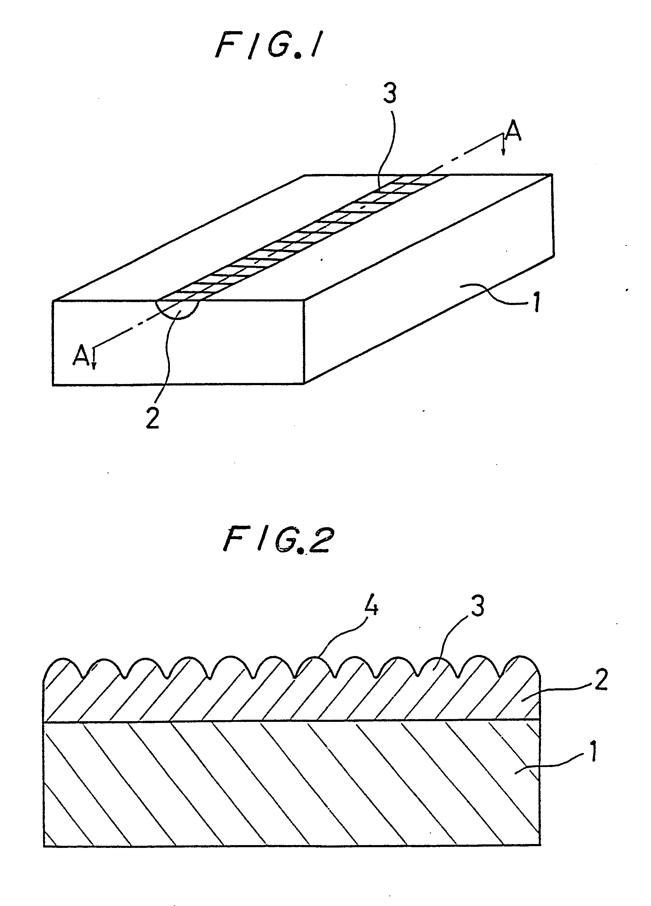

In Figure 1 and 2, the numeral 1 is a nonlinear medium 1, such as is made of a monocrystal of LiNbO3 and is formed in the shape of rectangular parallelopiped. A waveguide 2 made from the diffusion of Ti is provided with expanding in the same direction as a crystallographic axis of the nonlinear medium 1 in the upper face of same medium 1.

As shown in Figure 2, the upper face of the waveguide 2 consists of projections 3 having a specific length of pitch and the diffraction grating 4 which provides the refractive index distribution, as a refractive index dispersion means. The projections 3 forming continued waveforms are provided in the direction of a crystallographic axis of the nonlinear medium 1. And Bragg condition is satisfied since the pitch of the diffraction grating 4 is the same as the wavelength of a fundamental wave laser light incident into the waveguide 2.

In the above embodiment, if the semiconductor laser array having an oscillation wavelength of 780 nm is used as a light source of the fundamental wave, since the nonlinear medium 1 is made of LiNbO3, the refractive index differs significantly from the fundamental wave laser light to the second higher harmonic laser light, that is, the wavelength dispersion of the refractive index is 2.26 for the fundamental wave laser light P having a wavelength of 780 nm and is 2.4 for the second higher harmonic laser light H having a wavelength of 390 nm.

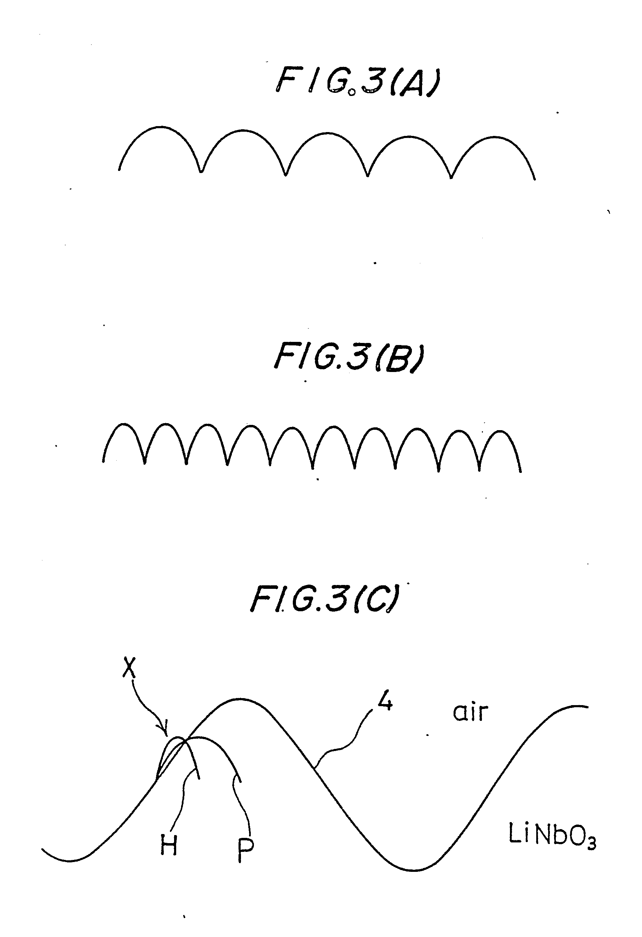

As shown in Figure 3(A) and 3(B), the luminious intensity distribution of the fundamental wave laser light P differs from that of the second harmonic laser light H. Thus, the effective refractive index distribution occurs from the diffraction grating 4 results in producing the difference between them. This difference is indicated with an arrow X in Figure 3(C). The effective refractive index of the second higher harmonic wave laser light drops significantly because the second higher harmonic laser light H is much influenced by the air which has a small refractive index, than the fundamental wave laser light.

Therefore, it can be easily couterbalanced the difference of the refractive index caused by the wavelength dispersion, and satisfies matching the phase conditions between the fundamental wave laser light P and the second higher harmonic laser light H. As a results, the high conversion efficiency can be obtained between them (according to the preferred embodiment of the present invention). And in this embodiment, since the higher harmonic laser light is generated by using the ordinary ray as the fundamental wave, it can be obtaied higher convertible rate between them, which the nonlinear constant is one-figure greater comparing to the conventional method for matching the phase using the ordinary ray or the extraordinary ray. Specifically, 10 mW of the second higher harmonic laser light is obtained when the light source of the fundamental wave laser light is 100 mW, and the length of a waveguide is 100 um.

While only certain embodiments of the present invention have been described, it will be apparent to those skilled in the art that various changes and modifications may be made therein without departing from the spirit and scope of the present invention as claimed.

There are described above novel features which the skilled man will appreciate give rise to advantages. These are each independent aspects of the invention to be covered by the present application, irrespective of whether or not they are included within the scope of the following claims.

## Claims

1. A semiconductor harmonic generating device comprising nonlinear medium means and waveguide means which is provided in said nonlinear medium means, said waveguide means generating a higher harmonic laser light from a fundamental wave laser light which passes through said waveguide means, and refractive index dispersion means provided in said waveguide means for counterbalancing refractive index difference caused by wavelength dispersion which occurs in said nonlinear medium, between said fundamental wave laser light and said higher harmonic laser light.

2. A higher harmonic generating device according to claim 1, wherein said nonlinear medium means is made of LiNbO3 and is formed in the shape of rectangular parallelopiped.

3. A higher harmonic generating device according to claim 1, wherein the upper face of said waveguide means is provided with projections which are located in the direction of a crystallographic axis of said nonlinear medium means and forming continued waveforms.

4. A higher harmonic generating device according to claim 1, wherein a pitch of a diffraction grating as said refractive index dispersion means is same as the wavelength of said fundamental wave laser light incident into said waveguide.

## FIG.1

3

A

A

2

1

## FIG.2

4   3

2

1

# FIG. 3(A)

# FIG. 3(B)

# FIG. 3(C)

X

4

air

H    P

LiNbO$_3$